# EUROPEAN PATENT SPECIFICATION

(11) **EP 2 191 999 B1**
(45) Date of publication and mention of the grant of the patent: **30.04.2014**
(21) Application number: 09013913.0
(22) Date of filing: 05.11.2009
(51) Int. Cl.: B60N 2/06

(54) **Seat slide structure**
Sitzschienestruktur
Structure de glissière de siège

(30) Priority: 28.11.2008 JP 2008303841
(43) Date of publication of application: 02.06.2010
(73) Proprietor: Delta Kogyo Co., Ltd., Aki-gun, Hiroshima 735-8501 (JP)
(72) Inventor: Umezaki, Kiyonori, Aki-gun, Hiroshima 735-8501 (JP); Tarusawa, Makoto, Aki-gun, Hiroshima 735-8501 (JP)
(74) Representative: Müller-Boré & Partner Patentanwälte PartG mbB

(56) References cited:
- EP-A2- 1 710 118
- DE-A1-102006 058 361
- US-A- 5 941 494
- US-A- 6 021 990
- US-A1- 2006 261 236
- US-B1- 6 290 199

## Description

### BACKGROUND OF THE INVENTION

### 1. Field of the Invention

The present invention relates to a seat slide structure.

### 2. Description of the Background Art

There has been known one type of seat slide structure, as proposed, for example, in JP 2004-106713A. The seat slide structure disclosed in this publication comprises a screw rod (externally threaded rod) non-rotatably fixed to a lower rail, and a nut member screwed with the screw rod. The nut member is held by a nut-holding member fixed to an upper rail. The nut member has an outer peripheral portion formed as a worm wheel portion meshed with teeth of a worm gear. The worm gear is coupled to a motor to allow a rotation of the motor to transmit to the nut member. When the worm gear is rotated in response to activation of the motor, the rotation is transmitted to the worm wheel portion and thereby the nut member is rotated at a reduced speed.

The nut-holding member is formed in a U shape made up of a front segment, a rear segment and a lower segment by bending a plate-shaped member. The nut-holding member receives and holds therein the nut member having front, rear, right and left sides surrounded by a nut casing (cover) (see FIG 4 of the JP 2004-106713A).

When the nut member moved along the screw rod in an axial direction of the screw rod while being rotated, the nut member pushes the nut-holding member frontwardly or rearwardly. Thus, the upper rail is moved frontwardly or rearwardly with respect to the lower rail.

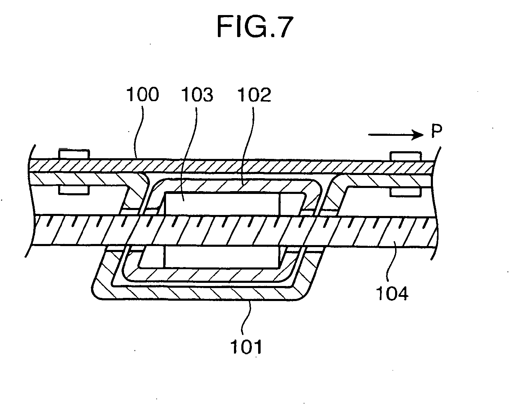

However, the above seal slide structure having the nut-holding member formed in the U shape involves the following problem. For example, in FIG. 7, when a frontward or rearward force P is applied to an upper rail 100 (FIG. 7 shows an example where the force P is a rearward force), a nut-holding member 101 is urged to move in the direction of the force P together with the upper rail 100, so that the nut-holding member 101 pushes a nut casing 102. The nut casing 102 applied with the force P pushes the nut member 103. In this state, the nut member 103 cannot be moved due to a screw engagement with a screw rod 104. Thus, the nut casing 102 and the nut-holding member 101 receive a reaction force from the nut member 103. Consequently, the nut-holding member 101 is likely to be deformed as shown in FIG. 7.

As means to suppress such deformation, it is contemplated to increase a plate thickness of the nut casing 102 and the nut-holding member 101. However, in this case, a force required for bending work during shaping of the nut casing 102 and the nut-holding member 101 becomes larger to cause difficulty in ensuring bending workability, and the nut-holding member is increased in size to cause difficulty in being set within an upper rail or a lower rail.

US 6 021 990 A, which is considered as being the closest prior art, discloses a seat adjustment assembly for driving a vehicle seat forwardly and rearwardly within a cab of a vehicle including a pair of lead screws which are driven by cables from a single motor. The lead screws engage a nut runner, and the nut runner is fixed to the lower track. The lead screws are fixed to the upper track, and when the lead screws rotate, the nut runner causes the lead screw to move axially. This thus causes the upper track relative to the lower track, and move the seat. The adjustment assembly is a modular unit which can be attached as an pre-assembled to the remainder of the vehicle seat. The housings incorporated into this arrangement are staked together, such that separate retaining members such as bolts are eliminated.

DE 10 2006 058 361 A1 discloses an adjusting device for adjusting a adjusting member of a vehicle comprising an adjusting gear drive, a gear drive holding bracket, on which the adjusting gear drive is mounted, and a spindle expending through at least one opening in the gear drive holding bracket toward the adjusting gear drive, wherein the spindle is in engagement with the adjusting gear drive, and wherein the opening in the gear drive holding bracket is reinforced.

### SUMMARY OF THE INVENTION

It is an object of the present invention to provide a seat slide structure comprising a nut-holding member which has sufficient strength resistant against deformation, and high shaping workability.

It is another object of the present invention to provide a seat slide structure comprising a nut-holding member capable of being downsized.

The present invention provides a seat slide structure which comprises a screw rod, a nut member and a nut-holding member. The screw rod is adapted to be attached to one of an elongate-shaped lower rail fixed to a vehicle body to allow a longitudinal direction thereof to extend along a frontward-rearward direction of the vehicle body, and an upper rail fixed to a seat to allow a longitudinal direction thereof to extend along the frontward-rearward direction of the vehicle body and adapted to be relatively movable with respect to the lower rail in the frontward-rearward direction. The nut member is screwed with the screw rod. The nut-holding member holds the nut member.

The nut-holding member includes a holding body, and a rib reinforcing the holding body. The holding body has an anchor section adapted to be fixed to a remaining one of the lower rail and the upper rail, a front segment disposed in a position frontward of the nut member, a rear segment disposed in a position rearward of the nut member, and a lower segment disposed in a position beneath the nut member to connect the front segment and the rear segment therethrough.

The rib is disposed in at least one of two positions on left and right sides of the holding body to extend along an axial direction of the screw rod, and fixed at least to the front segment and the rear segment of the holding body.

### BRIEF DESCRIPTION OF THE DRAWINGS

FIG. 1 is a perspective view showing a seat slide structure according to one embodiment of the present invention.
FIG. 2 is an exploded perspective view of the seat slide structure in FIG. 1.
FIG. 3 is a top plan view of a nut-holding member in a developed state.
FIG. 4 is a perspective view showing a state after the seat slide structure in FIG. 1 is assembled to an upper rail and a lower rail.
FIG. 5 is a sectional view taken along the line V-V in FIG. 4.
FIG. 6 is a sectional view taken along the line VI-VI in FIG. 5.
FIG. 7 is a fragmentary sectional view showing a conventional seat slide structure.

### DESCRIPTION OF THE PREFERRED EMBODIMENTS

With reference to the drawings, the present invention will be specifically described based on an embodiment thereof.

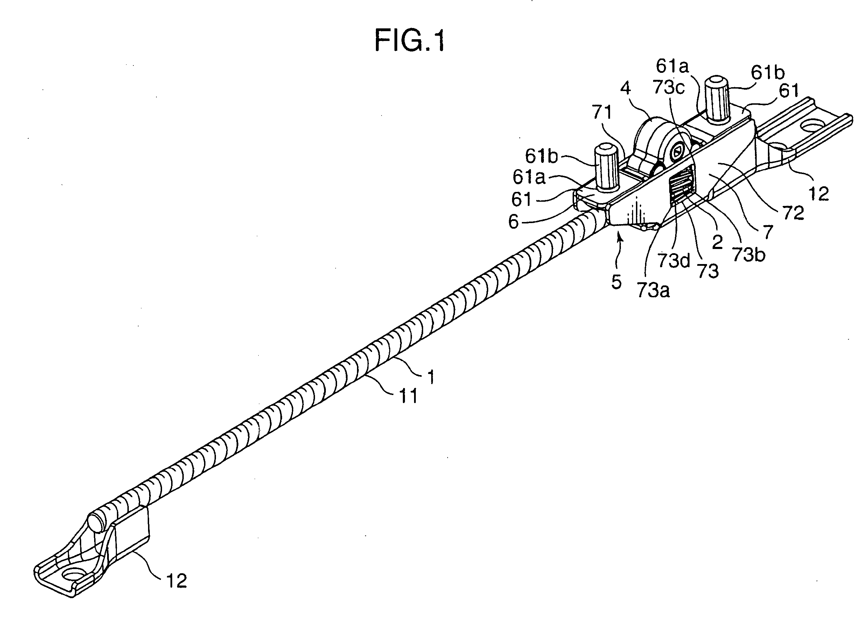

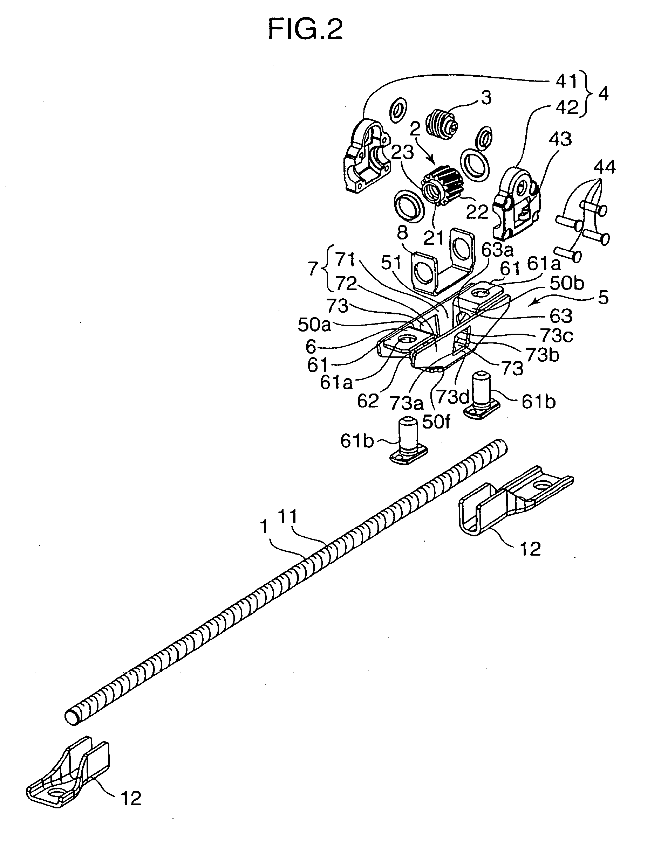

As shown in FIGS. 1 and 2, a seat slide structure for an automobile according to this embodiment comprises a screw rod 1, a nut member 2 screwed with the screw rod 1, a nut casing 4 housing the nut member 2, a nut-holding member 5 holding the nut casing 4 and the nut member 2 housed in the nut casing 4, and nut speed reduction means.

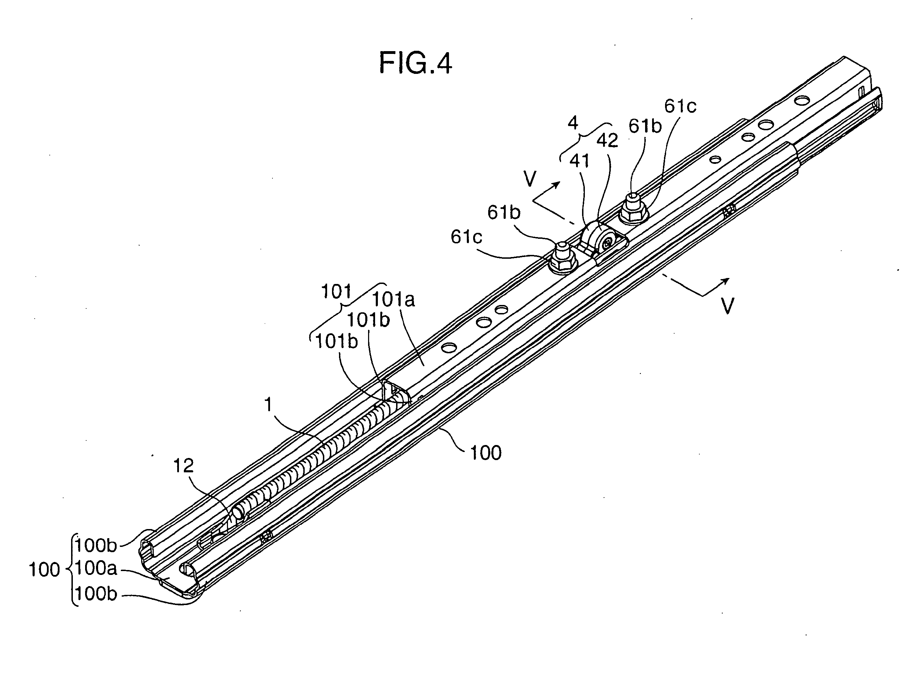

In this embodiment, the screw rod 1 is attached to a lower rail 100, and the nut-holding member 5 is attached to an upper rail 101. As shown in FIG. 4, each of the lower rail 100 and the upper rail 101 is an elongated-shaped member. The lower rail 100 is fixed to a floor surface of the automobile to allow a longitudinal direction thereof to extend along a frontward-rearward direction of an automobile body. The upper rail 101 is fixed to a seat of the automobile.

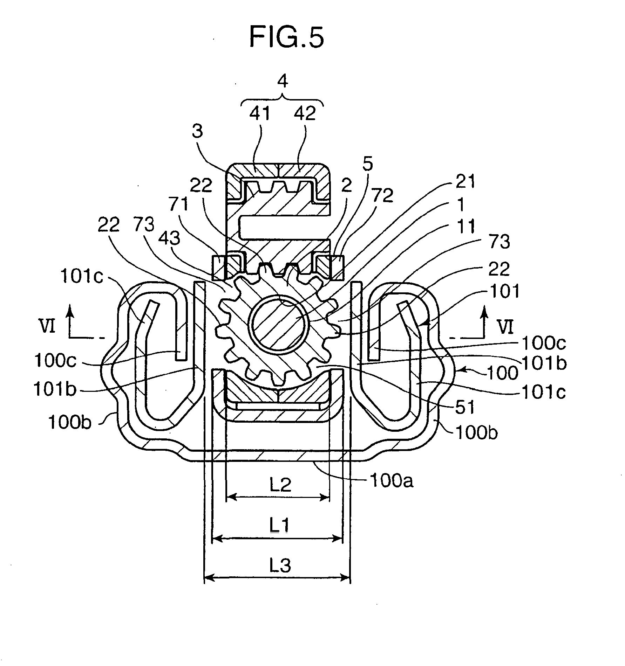

As shown in FIGS. 4 and 5, the lower rail 100 has a generally U shape in cross-section. The lower rail 100 has a lower wall 100a extending in the longitudinal direction, and two lateral walls 100b,100b each extending upwardly from a respective one of opposite edges of the lower wall 100a located in a widthwise (rightward-leftward) direction of the automobile body. Thus, a groove opened upwardly is defined within the lower rail 100 to extend in the longitudinal direction. Each of the lateral walls 100b has a folded-back segment 100c formed by folding back an upper end thereof inwardly in the widthwise direction.

The upper rail 101 has a generally U shape in cross-section. The upper rail 101 has an upper wall 101 a extending in a longitudinal direction thereof, and two lateral walls 101b,101b each extending downwardly from a respective one of opposite edges of the upper wall 101a located in the widthwise direction. Each of the lateral walls 101b has a folded-back segment 101c formed by folding back a lower end thereof outwardly in the widthwise direction.

As shown in FIG. 5, the upper rail 101 is disposed within the groove of the lower rail 100 in such a manner that each of the bilateral folded-back segments 101c thereof is engaged with a corresponding one of the folded-back segments 100c of the lower rail 100. Thus, the upper rail 101 is relatively movable with respect to the lower rail 100 in the frontward-rearward direction.

The screw rod 1 has an outer peripheral portion formed with an external thread 11 over approximately the overall length in an axial direction thereof. The screw rod 1 is disposed within the lower rail 100 to allow the axial direction thereof to extend along the longitudinal direction of the lower rail 100. Each of opposed ends of the screw rod 1 located in the axial direction is non-rotatably attached to the lower rail 100 through a mounting member 12 (see FIGS. 1 and 4).

In this embodiment, the nut member 2 has a cylindrical shape, as shown in FIG. 2. The nut member 2 has an inner peripheral portion formed with an internal thread 21 screwable (threadingly engageable) with the external thread 11 of the screw rod 1. The nut member 2 has an outer peripheral portion formed as a worm wheel portion 22. The worm wheel portion 22 is meshed with an after-mentioned worm 3.

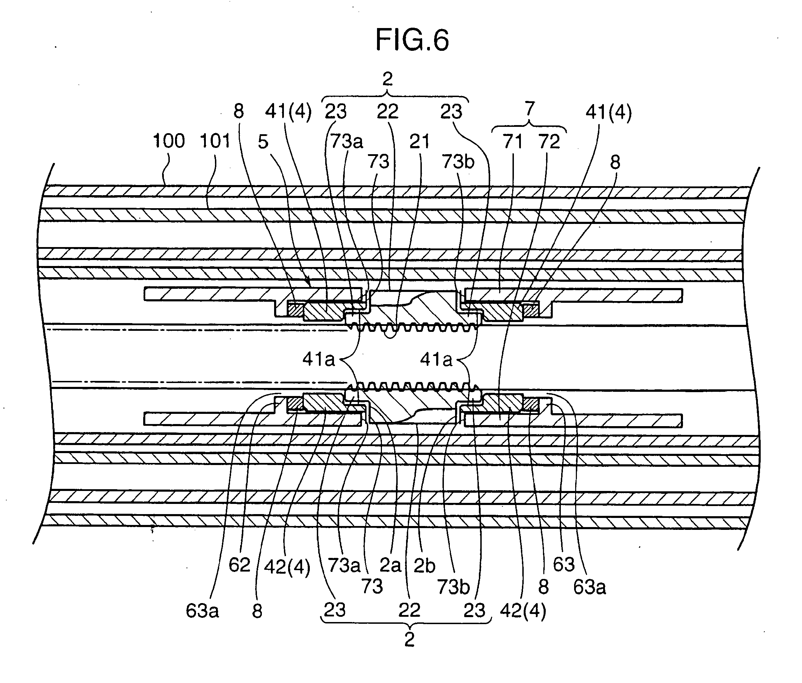

As shown in FIGS. 2 and 6, the nut member 2 has a pair of protruding portions 23, 23. One of the protruding portions 23 is formed in a cylindrical shape to protrude frontwardly from a front end of the worm wheel portion 22 located in the axial direction. The other protruding portion 23 is formed in a cylindrical shape to protrude rearwardly from a rear end of the worm wheel portion 22 located in the axial direction. Each of the protruding portions 23 has an outer diameter less than that of the worm wheel portion 22.

The nut speed reduction means is comprised of the worm wheel portion 22 of the nut member 2, and a worm 3. The worm 3 is connected to a motor (not shown) serving as driving means, and adapted to be rotated in response to activation of the motor.

The nut casing 4 has a housing space for housing the nut member 2 and the worm 3 meshed with the nut member 2. Each of the nut member 2 and the worm 3 is housed in the housing space in a rotatable manner. The nut casing 4 comprises a combination of a left casing segment 41 and a right casing segment 42 each made of a synthetic resin. As shown in FIG. 6, the nut casing 4 has two fitting portions 41 a, 41 a adapted to allow respective ones of the protruding portions 23, 23 of the nut member 2 to be fitted thereinto so as to rotatably hold the nut member 2 relative to the nut casing 4.

Each of the left casing segment 41 and the right casing segment 42 has a window hole 43 formed to allow a part of the outer peripheral portion of the nut member 2, i.e., a part of the worm wheel portion 22, to enter thereinto. In other words, each of the left casing segment 41 and the right casing segment 42 has a window hole 43 for allowing a part of the worm wheel portion 22 to escape outside the housing space.

The left casing segment 41 and the right casing segment 42 are connected together by a screw 44 after the nut member 2 and the worm 3 are housed therein. In the housed state, as shown in FIG. 5, a part of the worm wheel portion 22 of the nut member 2 protrudes from the respective window holes 43 of the left casing segment 41 and the right casing segment 42 to the outside.

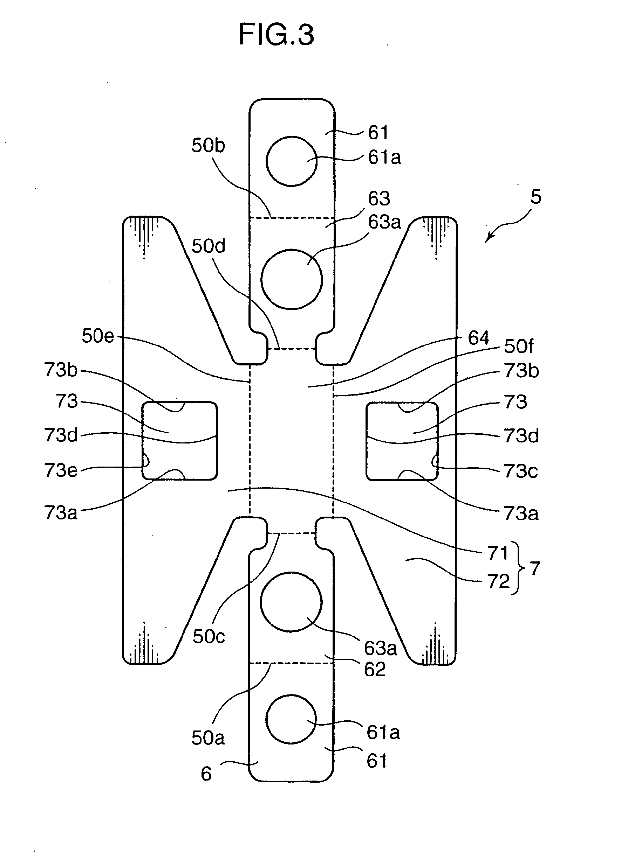

The nut-holding member 5 comprises a holding body 6 and a rib 7. The nut-holding member 5 is a box-like shaped member having a nut-receiving section 51 for receiving therein the nut casing 4. In this embodiment, as shown in FIGS. 2 and 3, the nut-holding member 5 having the holding body 6 and the rib 7 is formed into a desired shape by subjecting a single metal plate to bending work.

The holding body 6 has a lower segment 64, a front segment 62, a rear segment 63, and a pair of anchor segments 61 serving as an anchor section. The rib 7 is provided as a means to reinforce the holding body 6 primarily against a force to be applied in the frontward-rearward direction. The rib 7 has a left rib segment 71 and a right rib segment 72. Each of the lower segment 64, the front segment 62, the rear segment 63, the pair of anchor segments 61, the left rib segment 71 and the right rib segment 72 of the nut-holding member 5 has the same thickness.

The lower segment 64 is a plate-shaped sub-member extending along the axial direction of the screw rod 1 (the frontward-rearward direction of the automobile body). The front segment 62 is a plate-shaped sub-member which bendingly extends upwardly from a bending line 50c, i.e., a front edge of the lower segment 64, at an approximately right angle with respect the lower segment 64. The rear segment 63 is a plate-shaped sub-member which bendingly extends upwardly from a bending line 50d, i.e., a rear edge of the lower segment 64, at an approximately right angle with respect the lower segment 64. Each of the front segment 62 and the rear segment 63 is disposed to extend in a direction approximately perpendicular to the axial direction of the screw rod 1. Each of the front segment 62 and the rear segment 63 has a rod insertion hole 63a for allowing the screw rod 1 to be inserted thereinto in a relatively movable manner in the frontward-rearward direction.

One of the pair of the anchor segments 61 is a plate-shaped sub-member which bendingly extends frontwardly from a bending line 50a, i.e., an upper edge of the front segment 62, at an approximately right angle with respect the front segment 62. The other anchor segment 61 is a plate-shaped sub-member which bendingly extends rearwardly from a bending line 50b, i.e., an upper edge of the rear segment 63, at an approximately right angle with respect the rear segment 63. Each of the anchor segments 61 has a bolt insertion hole 61a. The nut-holding member 5 is fixed to the upper rail 101 through an operation of inserting two bolts 61 b into respective ones of the bolt insertion holes 61 a and screwing two fixing nuts 61 c onto respective ones of the bolts 61 b, as described later.

The left rib segment 71 is a plate-shaped sub-member which bendingly extends upwardly from a bending line 50e, i.e., a left edge of the lower segment 64. The right rib segment 72 is a plate-shaped sub-member which bendingly extends upwardly from a bending line 50f, i.e., a right edge of the lower segment 64. Each of the left rib segment 71 and the right rib segment 72 is disposed to extend in a direction approximately parallel to the axial direction of the screw rod 1.

The nut-receiving section 51 has a box-like shape (rectangular parallelepiped shape) made up of respective inner surfaces of the lower segment 64, the front segment 62, the rear segment 63, the left rib segment 71 and the right rib segment 72. Each of the bending lines 50a, the bending line 50b, the bending line 50c and the bending line 50d is formed to extend approximately parallel to each other. Each of the bending line 50e and the bending line 50f is formed to extend approximately parallel to each other. Each of the bending line 50e and the bending line 50f is formed to extend in a direction approximately perpendicular to that of each of the bending line 50c and the bending line 50d. The bending line 50e is located in approximately the same plane as that defined by respective left edge surfaces (left edges) of the front segment 62 and the rear segment 63. The bending line 50f is located in approximately the same plane as that defined by respective right edge surfaces (right edges) of the front segment 62 and the rear segment 63.

As shown in FIGS. 2 and 3, each of the left rib segment 71 and the right rib segment 72 has an opening portion (escape hole) 73 for allowing a part of the outer peripheral portion of the nut member 2, i.e., a part of the worm wheel portion 22, to enter thereinto. In other words, each of the left rib segment 71 and the right rib segment 72 has an opening portion 73 for allowing a part of the worm wheel portion 22 to escape outside the nut-receiving section 51.

Each of the opening portions 73 is opened in a quadrangular shape. An inner peripheral surface of each of the opening portions 73 has four regions consisting of a front region (front inner sub-surface) 73a and a rear region (rear inner sub-surface) 73b which are located in opposed relation to each other in the frontward-rearward direction, and an upper region (upper inner sub-surface) 73c and a lower region (lower inner sub-surface) 73d which are located in opposed relation to each other in an upward-downward direction. The front inner sub-surface 73a and the rear inner sub-surface 73b correspond to a pair of nut edge surface-facing regions facing to respective ones of a front edge surface 2a and a rear edge surface 2b of the nut member 2 located in the axial direction, as described later. As shown in FIG. 6, the nut member 2 is formed and disposed such that the front edge surface 2a thereof defines a small gap with respect to the front inner sub-surface 73a of the opening portion 73, and the rear edge surface 2b thereof defines a small gap with respect to the rear inner sub-surface 73b of the opening portion 73.

The left rib segment 71 is in contact with approximately the entire region of respective left edge surfaces (left edges) of the front segment 62, the rear segment 63 and the anchor segments 61. The right rib segment 72 is in contact with approximately the entire region of respective right edge surfaces (right edges) of the front segment 62, the rear segment 63 and the anchor segments 61. Each of the left rib segment 71 and the right rib segment 72 is fixed to the front segment 62, the rear segment 63 and the anchor segments 61 by after-mentioned fixing means, through the corresponding contact region. For convenience of illustration, in FIG. 2, the left rib 71 and each of the anchor segments 61 are illustrated as if they are not in contact with each other there with a distance therebetween,

As shown in FIG. 5, in the rightward-leftward (widthwise) direction, an outer width L1 of the nut-holding member 5 is less than an inner width L3 of the upper rail 101, so that the upper rail 101 can receive therein the nut-holding member 5. Further, in the rightward-leftward (widthwise) direction, an inner width L2 of the nut-holding member 5 is less than the outer diameter of the worm wheel portion 22 of the nut member 2, so that a part of the worm wheel portion 22 enters into the escape holes 73 of the left rib segment 71 and the right rib segment 72.

Before the left rib segment 71 and the right rib segment 72 are fixed to the front segment 62, the rear segment 63 and the anchor segments 61, the nut member 2 is placed in the nut-receiving section 51 of the nut-holding member 5. More specifically, the left rib segment 71 and the right rib segment 72 are subjected to preliminary bending work, in such a manner that bending thereof with respect to the lower segment 64 is stopped at a position where a distance therebetween is still greater than the outer diameter of the worm wheel portion 22 of the nut member 2 (see FIG. 2), to form the nut-receiving section 51. Then, the nut casing 4 housing the nut member 2 is placed in the nut-receiving section 51. In this embodiment, a U-shaped elastic member 8 (illustrated in FIG. 2) made of a synthetic resin is disposed between the nut casing 4 and the nut-holding member 5.

The elastic member 8 has a bottom portion interposed between an upper surface of the lower segment 64 of the nut-holding member 5 and a lower surface of the nut casing 4, a front portion extending upwardly from a front edge of the bottom portion and having an insertion hole for allowing the screw rod 1 to be inserted thereinto, and a rear portion extending upwardly from a rear edge of the bottom portion and having an insertion hole for allowing the screw rod 1 to be inserted thereinto.

The front portion of the elastic member 8 is interposed between an inner surface of the front segment 62 of the nut-holding member 5 and a front surface of the nut casing 4. The rear portion of the elastic member 8 is interposed between an inner surface of the rear segment 63 of the nut-holding member 5 and a rear surface of the nut casing 4. This makes it possible to suppress the occurrence of a gap between the nut casing 4 and the nut-holding member 5 in the frontward-rearward direction, and limit a movement of the nut casing 4 with respect to the nut-holding member 5 in the frontward-rearward direction, to a range of elastic deformation of the elastic member 8. In the upward-downward direction and the rightward-leftward direction, the nut casing 4 can be slightly moved with respect to the nut-holding member 5.

After placing the nut casing 4 in the nut-receiving section 51, the left rib segment 71 is further bent to a position where it is brought into contact with approximately the entire region of the respective left edge surfaces of the front segment 62, the rear segment 63 and the anchor segments 61, and fixed to the front segment 62, the rear segment 63 and the anchor segments 61 in the contact state, by fixing means. For example, the fixing means includes laser welding using a laser.

In the same manner, the right rib segment 72 is further bent to a position where it is brought into contact with approximately the entire region of the respective right edge surfaces of the front segment 62, the rear segment 63 and the anchor segments 61, and fixed to the front segment 62, the rear segment 63 and the anchor segments 61 in the contact state, by the fixing means, such as laser welding.

In this way, the nut casing 4 housing the nut member 2 is held by the nut-holding member 5. In this state, as shown in FIGS. 1, 5 and 6, a part of the worm wheel portion 22 of the nut member 2 enters in the opening portions 73 of the left rib segment 71 and the right rib segment 72. Further, as shown in FIG. 6, the part of the worm wheel portion 22 to be allowed to enter into the opening portion 73 has a part of the front edge surface 2a and a part of the rear edge surface 2b located in the axial direction, wherein the front inner surface 73a (nut edge surface-facing region) of each of the opening portions 73 is located to face the part of the front edge surface 2a of the part of the worm wheel portion 22 entering in the opening portions 73, and the rear inner surface 73b (nut edge surface-facing region) of each of the opening portions 73 is located to face the part of the rear edge surface 2b of the part of the worm wheel portion 22 entering in the opening portions 73.

The nut-holding member 5 is fixed to the upper rail 101 by the bolts 61b inserted into respective ones of the bolt insertion holes 61 a, and the fixing nuts 61 c. The screw rod 1 is fixed to the lower rail 100 along the longitudinal direction of the lower rail 100, under a condition that it is inserted into the rod insertion holes 63a of the nut-holding member 5 and the insertion holes of the elastic member 8, and screwed with the nut member 2.

An operation of the seat slide structure according to this embodiment will be described below. When the worm 3 is rotated in response to activation of the motor (not shown) connected to the worm 3, the nut member 2 having the worm wheel portion 22 meshed with the worm 3 is rotated at a reduced speed relative to a rotation speed of the motor. According to the rotation, the nut member 2 is relatively moved with respect to the screw rod 1 in the axial direction. Specifically, the screw rod 1 is fixed to the lower rail 100, and thereby the nut member 2 is moved along the axial direction of the screw rod 1.

During the movement of the nut member 2, the nut member 2 pushes the nut-holding member 5 through the nut casing 4, so that the nut-holding member 5 is moved along the axial direction of the screw rod 1. The nut-holding member 5 is fixed to the upper rail 101. Thus, according to the movement of the nut-holding member 5, the upper rail 101 and the seat fixed to the upper rail 101 are moved with respect to the automobile body in the frontward-rearward direction.

The present invention is not limited to the above embodiment, but various changes and modifications may be made therein without departing from the spirit and scope thereof as set forth in appended claims. For example, although the rib 7 in the above embodiment comprises the left rib segment 71 and the right rib segment 72, the rib 7 may be comprised, for example, of one of the left rib segment 71 and the right rib segment 72.

Further, although each of the left rib segment 71 and the right rib segment 72 in the above embodiment is bent to extend upwardly from the lower segment 64, one or both of the left rib segment 71 and the right rib segment 72 may be formed as a separate member(s) independent of the holding body 6, and fixed to the lower segment 64 by fixing means, such as welding.

However, when each of the left rib segment 71 and the right rib segment 72 is formed as a member integral with the lower segment 64 as in the above embodiment, it can be formed into a desired shape by bending work in an easy manner and at a low cost.

In the case where one or both of the left rib segment 71 and the right rib segment 72 may be formed as a separate member(s) independent of the holding body 6, the left rib segment 71 and/or the right rib segment 72 may be fixed to the front segment 62, the rear segment 63, the lower segment 64 and the anchor segments 61. Alternatively, the left rib segment 71 and/or the right rib segment 72 may be fixed to only the front segment 62, the rear segment 63 and the lower segment 64. Alternatively, the left rib segment 71 and/or the right rib segment 72 may be fixed to only the front segment 62, the rear segment 63 and the anchor segments 61. Alternatively, the left rib segment 71 and/or the right rib segment 72 may be fixed to only the front segment 62 and the rear segment 63.

Further, although the opening portion 73 in the above embodiment is formed in both the left rib segment 71 and the right rib segment 72, it may be formed in only one of the left rib segment 71 and the right rib segment 72. Alternatively, the left rib segment 71 and the right rib segment 72 may be devoid of the opening portion 73.

Further, although each of the left rib segment 71 and the right rib segment 72 in the above embodiment is comprised of a plate-shaped member, it may be comprised, for example, of one or more bar-shaped members.

Further, in the above embodiment, the nut-holding member 5 is fixed to the upper rail 101, and the screw rod 1 is fixed to the lower rail 100. Alternatively, the nut-holding member 5 may be fixed to the lower rail 100, and the screw rod 1 may be fixed to the upper rail 101.

Further, in the above embodiment, the seat slide structure is applied to the automobile. Alternatively, the seat slide structure of the present invention can be applied to other vehicles.

Features and advantages of the present invention described based on the above embodiments will be summarized as follows.

In the seat slide structure, the nut-holding member includes a holding body, and a rib reinforcing the holding body. The holding body has an anchor section adapted to be fixed to a remaining one of the lower rail and the upper rail, a front segment disposed in a position frontward of the nut member, a rear segment disposed in a position rearward of the nut member, and a lower segment disposed in a position beneath the nut member to connect the front segment and the rear segment therethrough. The rib is disposed in at least one of two positions on left and right sides of the holding body to extend along an axial direction of the screw rod, and fixed at least to the front segment and the rear segment of the holding body.

Based on this feature, the nut-holding member becomes resistant against deformation in the frontward or rearward direction of the automobile body. For example, when a force is applied to the seat in the frontward or rearward direction, it is also applied to the upper rail. Thus, the upper rail and the nut-holding member fixed to the upper rail are urged to move in a direction of the force, and thereby the force is applied to the nut casing and the nut member. In this state, the nut member cannot be moved due to a screw engagement with the screw rod. Thus, the nut-holding member receives a reaction force from the nut casing and the nut member in a direction opposite to that of the force.

Even in such a situation, the nut-holding member with the rib has a high strength against a force applied in the frontward-rearward direction, as compared with a conventional nut-holding member devoid of the rib. This makes it possible to suppress deformation of the nut-holding member. In addition, the nut-holding member having such a high strength can eliminate a need for increasing a plate thickness thereof. This makes it possible to facilitate shape forming and downsizing of the nut-holding members.

Further, even in the seat slide structure using the nut casing for housing the nut member as in the above feature, the deformation of the nut-holding member can be suppressed to reduce a force to be applied from the nut-holding member to the nut casing disposed between the nut member and the nut-holding member. This makes it possible to use a nut casing having a relatively low strength, such as the nut casing made of a synthetic resin.

In the seat slide structure, preferably, each of the front segment, the rear segment and the lower segment consists of a plate-shaped sub-member. The rib includes a left rib segment consisting of a plate-shaped sub-member disposed in the position on the left side of the holding body, and a right rib segment consisting of a plate-shaped sub-member disposed in the position on the right side of the holding body. The left rib segment is fixed to respective left ends of the front segment, the rear segment and the lower segment. The right rib segment is fixed to respective right ends of the front segment, the rear segment and the lower segment. Thus, the nut-holding member is formed as a box-shaped member which comprises the front segment, the rear segment, the lower segment, the left rib segment and the right rib segment, wherein the box-shaped member internally has a nut-receiving section capable of receiving therein the nut member.

In the above arrangement, the left rib segment and the right rib segment each consisting of a plate-shaped sub-member are disposed in respective ones of the positions on the left and right sides of the holding body and fixed to the front segment, the rear segment and the lower segment, so that the holding body can be reinforced in the positions on the left and right sides of the holding body. Thus, the strength of the nut-holding member can be further increased, so that the plate thickness of each of the segments can further reduced while maintaining a required strength. This makes it possible to further facilitate shape forming and downsizing of the nut-holding members.

In the above arrangement, each of the segments of the nut-holding member consists of a plate-shaped sub-member. Thus, the front segment, the rear segment and the lower segment of the holding body, and the left rib segment and the right rib segment of the rib, can be formed into a desired shape, for example, by subjecting a single metal plate to bending work. This makes it possible to enhance shaping workability so as to facilitate a reduction in cost.

In the seat slide structure, preferably, each of the left rib segment and the right rib segment has an opening portion formed to allow a part of an outer peripheral portion of the nut member to enter thereinto.

In the above arrangement, a width of the nut-holding member in the rightward-leftward direction can be reduced by a distance over which the part of an outer peripheral portion of the nut member enters into the opening portions. This makes it possible to further downsize the nut-holding member.

In the seat slide structure, preferably, the part of the outer peripheral portion of the nut member to be allowed to enter into the opening portions has opposite edge surfaces located in the axial direction, and wherein an inner peripheral surface of each of the opening portions has a pair of nut edge surface-facing regions facing to respective ones of the edge surfaces of the part of the outer peripheral portion entering in the opening portions.

In the above arrangement, when the nut-holding member is urged to move in the direction of the force as described above, one of the front edge surface and the rear edge surface of the nut member can be brought into contact with a corresponding one of the front inner surface and the rear inner surface of each of the opening portions of the rib. Thus, the nut-holding member can receive the reaction force from the nut casing and the nut member by the front inner surface or the rear inner surface of the rib. This allows the nut-holding member to become further resistant against the deformation.

Further, even in the seat slide structure using the nut casing for housing the nut member as in the above feature, one of the front edge surface and the rear edge surface can be brought into contact with a corresponding one of the front inner surface and the rear inner surface to effectively suppress the deformation in the above manner, so that a force to be applied from the nut-holding member to the nut casing can be further reduced.

In the seat slide structure, preferably, as shown in FIG. 6, an elastic member is interposed between the front surface of the nut casing and the inner surface of the front segment. In the same manner, an elastic member is interposed between the rear surface of the nut casing and the inner surface of the rear segment. A distance between the front surface of the nut casing and the inner surface of the front segment is set to be greater than a distance between the front edge surface of the nut member and the front inner surface of each of the opening portions. Further, a distance between the rear surface of the nut casing and the inner surface of the rear segment is set to be greater than a distance between the rear edge surface of the nut member and the rear inner surface of each of the opening portions.

Thus, for example, when the nut-holding member is slightly moved in the frontward direction due to a frontward force applied thereto, the rear inner surfaces of the opening portions can be brought into contact with the rear edge surface of the nut member before the inner surface of the rear segment is brought into contact with the rear surface of the nut casing. In the same manner, when the nut-holding member is slightly moved in the rearward direction due to a rearward force applied thereto, the front inner surfaces of the opening portions can be brought into contact with the front edge surface of the nut member before the inner surface of the front segment is brought into contact with the front surface of the nut casing.

In case where the distance between the front surface of the nut casing and the inner surface of the front segment is set to be less than the distance between the front edge surface and the front inner surface, and the distance between the rear surface of the nut casing and the inner surface of the rear segment is set to be less than the distance between the rear edge surface and the rear inner surface, even if the nut-holding member starts being deformed due to the reaction force from the nut member, one of the front inner surface and the rear inner surface can be brought into contact with a corresponding one of the front edge surface and the rear edge surface just after the occurrence of slight deformation, to receive the reaction force. This can prevent the nut-holding member from being largely deformed.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

## Claims

1. A seat slide structure comprising:
a screw rod (1) adapted to be attached to one of an elongate-shaped lower rail (100) fixed to a vehicle body to allow a longitudinal direction thereof to extend along a frontward-rearward direction of the vehicle body, and an upper rail (101) fixed to a seat to allow a longitudinal direction thereof to extend along the frontward-rearward direction of the vehicle body and adapted to be relatively movable with respect to the lower rail (100) in the frontward-rearward direction;
a nut member (2) screwed with the screw rod (1); and
a nut-holding member (5) holding the nut member (2), the nut-holding member (5) being made of metal,
wherein the nut-holding member (5) includes:
a holding body (6) having an anchor section (61) adapted to be fixed to a remaining one of the lower rail (100) and the upper rail (101), a front segment (62) disposed in a position frontward of the nut member (2), a rear segment (63) disposed in a position rearward of the nut member (2), and a lower segment (64) disposed in a position beneath the nut member (2) to connect the front segment (62) and the rear segment (63) therethrough; and
a rib (7) disposed in at least one of two positions on left and right sides of the holding body (6) to extend along an axial direction of the screw rod (1), and fixed at least to the front segment (62) and the rear segment (63) of the holding body (6) to reinforce the holding body (6),
**characterized in that** each of the front segment (62), the rear segment (63) and the lower segment (64) consists of a plate-shaped sub-member,
the rib (7) includes a left rib segment (71) consisting of a plate-shaped sub-member disposed in the position on the left side of the holding body (6), and a right rib segment (72) consisting of a plate-shaped sub-member disposed in the position on the right side of the holding body (6),
the left rib segment (71) is fixed to respective left ends of the front segment (62), the rear segment (63) and the lower segment (64), and the right rib segment (72) is fixed to respective right ends of the front segment (62), the rear segment (63) and the lower segment (64), whereby the nut-holding member (5) is formed as a box-shaped member which comprises the front segment (62), the rear segment (63), the lower segment (64), the left rib segment (71) and the right rib segment (72), the box-shaped member internally has a nut-receiving section (51) capable of receiving therein the nut member (2), and each of the left rib segment (71) and the right rib segment (72) has an opening portion (73) formed to allow a part of an outer peripheral portion of the nut member (2) to enter thereinto.

2. The seat slide structure as defined in claim 1, wherein the part of the outer peripheral portion of the nut member (2) to be allowed to enter into the opening portions has opposite edge surfaces located in the axial direction, and wherein an inner peripheral surface of each of the opening portions has a pair of nut edge surface-facing regions (73a, 73b) facing to respective ones of the edge surfaces of the part of the outer peripheral portion entering in the opening portions.

## Patentansprüche

1. Sitzschiebe- bzw. schienenstruktur, umfassend:
eine Schraub- bzw. Gewindestange (1), die angepasst ist, an einer von einer länglich geformten unteren Schiene (100), die an einem Fahrzeugkörper bzw. -aufbau fixiert bzw. befestigt ist, um zu erlauben, dass sich eine Längsrichtung davon entlang einer Vorne-Hinten-Richtung des Fahrzeugkörpers erstreckt, und einer oberen Schiene (101) angebracht zu sein, die an einem Sitz fixiert bzw. befestigt ist, um zu erlauben, dass sich eine Längsrichtung davon entlang der Vorne-Hinten-Richtung des Fahrzeugkörpers erstreckt, und die angepasst ist, bezüglich der unteren Schiene (100) in der Vorne-Hinten-Richtung relativ beweglich zu sein;
ein Mutterglied (2), das mit der Schraubstange (1) geschraubt bzw. verschraubt ist; und
ein Mutterhalteglied (5), welches das Mutterglied (2) hält, wobei das Mutterhalteglied (5) aus Metall besteht,
wobei das Mutterhalteglied (5) enthält:
einen Haltekörper (6) mit einem Ankerabschnitt (61), der angepasst ist, an einer übrigen Einen der unteren Schiene (100) und der oberen Schiene (101) fixiert bzw. befestigt zu sein, einem vorderen Segment (62), das in einer Position vor dem Mutterglied (2) angeordnet ist, einem hinteren Segment (63), das in einer Position hinter dem Mutterglied (2) angeordnet ist, und einem unteren Segment (64), das in einer Position unter dem Mutterglied (2) angeordnet ist, um das vordere Segment (62) und das hintere Segment (63) dadurch bzw. durch sich zu verbinden; und
eine Rippe (7), die in zumindest einer von zwei Positionen auf linken und rechten Seiten des Haltekörpers (6) angeordnet ist, um sich entlang einer axialen Richtung der Schraubstange (1) zu erstrecken, und zumindest an dem vorderen Segment (62) und dem hinteren Segment (63) des Haltekörpers (6) fixiert bzw. befestigt ist, um den Haltekörper (6) zu verstärken,
**dadurch gekennzeichnet, dass** jedes des vorderen Segments (62), des hinteren Segments (63) und des unteren Segments (64) aus einem plattenförmigen Unter- bzw. Teilglied besteht,
die Rippe (7) ein linkes Rippensegment (71), das aus einem plattenförmigen Unter- bzw. Teilglied besteht, das in der Position auf der linken Seite des Haltekörpers (6) angeordnet ist, und ein rechtes Rippensegment (72) enthält, das aus einem plattenförmigen Unter- bzw. Teilglied besteht, das in der Position auf der rechten Seite des Haltekörpers (6) angeordnet ist,
das linke Rippensegment (71) an jeweiligen linken Enden des vorderen Segments (62), des hinteren Segments (63) und des unteren Segments (64) fixiert bzw. befestigt ist und das rechte Rippensegment (72) an jeweiligen rechten Enden des vorderen Segments (62), des hinteren Segments (63) und des unteren Segments (64) fixiert bzw. befestigt ist, wodurch das Mutterhalteglied (5) als ein kastenförmiges Glied gebildet ist, welches das vordere Segment (62), das hintere Segment (63), das untere Segments (64), das linke Rippensegment (71) und das rechte Rippensegment (72) umfasst, wobei das kastenförmige Glied intern einen Mutteraufnahmeabschnitt (51) aufweist, der in der Lage ist, das Mutterglied (2) in sich aufzunehmen, und wobei jedes des linken Rippensegments (71) und des rechten Rippensegments (72) einen Öffnungsabschnitt (73) aufweist, der gebildet ist, um einem Teil eines Außenumfangsabschnitts des Mutterglieds (2) zu erlauben, darin einzutreten.

2. Sitzschienenstruktur nach Anspruch 1, wobei der Teil des Außenumfangsbereichs des Mutterglieds (2), dem es erlaubt ist, in den Öffnungsabschnitt einzutreten, gegenüberliegende bzw. entgegensetzte Kantenflächen bzw. -oberflächen aufweist, die sich in der axialen Richtung befinden, und wobei eine Innenumfangsfläche bzw. -oberfläche jedes der Öffnungsabschnitte ein Paar mutterkantenflächen- bzw. -oberflächenzugewandte Bereiche (73a, 73b) aufweist, die jeweiligen Einen der Kantenflächen des Teils des Außenumfangsabschnitts zugewandt sind, die in die Öffnungsabschnitte eintreten.

## Revendications

1. Structure de coulissement de siège comprenant :
une tige vissée (1) adaptée à être reliée à un d'un rail inférieur de forme allongée (100) fixé à une carrosserie de véhicule pour permettre à une direction longitudinale de celui-ci de s'étendre le long d'une direction vers l'avant-vers l'arrière de la carrosserie de véhicule et d'un rail supérieur (101) fixé à un siège pour permettre à une direction longitudinale de celui-ci de s'étendre le long de la direction vers l'avant-vers l'arrière de la carrosserie de véhicule et adapté à être relativement mobile par rapport au rail inférieur (100) dans la direction vers l'avant-vers l'arrière ;
un élément d'écrou (2) vissé à la tige vissée (1) ; et
un élément de maintien d'écrou (5) maintenant l'élément d'écrou (2), l'élément de maintien d'écrou (5) étant réalisé en métal,
dans laquelle l'élément de maintien d'écrou (5) inclut :
un corps de maintien (6) ayant une section d'ancrage (61) adaptée à être fixée à un rail restant du rail inférieur (100) et du rail supérieur (101), un segment avant (62) disposé dans une position vers l'avant de l'élément d'écrou (2), un segment arrière (63) disposé dans une position vers l'arrière de l'élément d'écrou (2) et un segment inférieur (64) disposé dans une position en dessous de l'élément d'écrou (2) pour connecter le segment avant (62) et le segment arrière (63) à travers celui-ci ; et
une nervure (7) disposée dans au moins une de deux positions des côtés gauche et droit du corps de maintien (6) pour s'étendre le long d'une direction axiale de la tige vissée (1) et fixée au moins au segment avant (62) et au segment arrière (63) du corps de maintien (6) pour renforcer le corps de maintien (6),
**caractérisée en ce que** chacun du segment avant (62), du segment arrière (63) et du segment inférieur (64) est constitué d'un élément secondaire en forme de plaque,
la nervure (7) inclut un segment de nervure gauche (71) constitué d'un élément secondaire en forme de plaque disposé dans la position du côté gauche du corps de maintien (6) et un segment de nervure droit (72) constitué d'un élément secondaire en forme de plaque disposé dans la position du côté droit du corps de maintien (6),
le segment de nervure gauche (71) est fixé à des extrémités gauches respectives du segment avant (62), du segment arrière (63) et du segment inférieur (64), et le segment de nervure droit (72) est fixé à des extrémités droites respectives du segment avant (62), du segment arrière (63) et du segment inférieur (64), moyennant quoi l'élément de maintien d'écrou (5) est formé comme élément en forme de boîte qui comprend le segment avant (62), le segment arrière (63), le segment inférieur (64), le segment de nervure gauche (71) et le segment de nervure droit (72), l'élément en forme de boîte possède de manière interne une section de réception d'écrou (51) capable de recevoir en son sein l'élément d'écrou (2), et chacun du segment de nervure gauche (71) et du segment de nervure droit (72) a une portion d'ouverture (73) formée pour permettre à une partie d'une portion périphérique externe de l'élément d'écrou (2) de pénétrer dans celle-ci.

2. Structure de coulissement de siège selon la revendication 1, dans laquelle la partie de la portion périphérique externe de l'élément d'écrou (2) devant être autorisée à pénétrer dans la portion d'ouverture a des surfaces de bord opposées situées dans la direction axiale, et dans laquelle une surface périphérique interne de chacune des portions d'ouverture a une paire de régions (73a, 73b) faisant face aux surfaces de bord d'écrou faisant face à des surfaces respectives des surfaces de bord de la partie de la portion périphérique externe pénétrant dans les portions d'ouverture.
